(19) **Europäisches Patentamt** / **European Patent Office** / **Office européen des brevets**

(11) **EP 3 905 516 A1**

(12) # EUROPEAN PATENT APPLICATION

(43) Date of publication:
**03.11.2021 Bulletin 2021/44**

(21) Application number: **20172373.1**

(22) Date of filing: **30.04.2020**

(51) Int Cl.:
**H02P 29/02** (2016.01)     **H02P 29/024** (2016.01)
**H02P 29/028** (2016.01)    **H02P 29/032** (2016.01)
**H02P 29/60** (2016.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **NAIR, P.V. Sudev**
  **560078 Bangalore, Karnataka (IN)**
• **REDDY, Nagendra Natha**
  **560068 Bangalore, Karnataka (IN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **SYSTEM, APPARATUS AND METHOD FOR MANAGING AN ELECTROMECHANICAL SYSTEM**

(57)     The present invention relates to a system, apparatus (110) and method for managing an electromechanical system (105). In an embodiment, the method comprises receiving, by a processing unit (130), operational data associated with the electromechanical system (105) from one or more sensing units (115) in real-time. Furthermore, the method comprises detecting an event associated with a power supplied to the electromechanical system (105) based on the operational data. Also, the method comprises configuring a virtual replica of the electromechanical system (105) using the operational data, based on the event detected. Additionally, the method further comprises generating one or more simulation results by simulating the configured virtual replica in a simulation environment. Moreover, the method comprises predicting an effect on the electromechanical system (105) due to the event based on the simulation results.

FIG 1

EP 3 905 516 A1

**Description**

The present disclosure relates to a field of electromechanical systems, and more particularly to a system, apparatus, and method for managing the electromechanical system.

Electromechanical systems such as induction motors operate on multi-phase power supply. Ideally, such a multi-phase power supply must be balanced. Voltage or current unbalances in the power supply may cause the electromechanical system to malfunction. For example, voltage unbalances causes a current leakage from any phase through bearings or a body of the electromechanical system. Consequently, a floating earth, that is a ground which is disconnected from Earth, is formed resulting in fluctuating current. In addition to the above, voltage or current unbalances also lead to uneven current flow in windings of the electromechanical system. The uneven current flow causes increased heat dissipation in certain parts of the electromechanical system due to copper losses. As a result, hotspots are formed in different parts of the electromechanical system. The term 'hotspot', as used herein, refers to an area of high temperature in a specific part of the electromechanical system resulting from the increased heat dissipation. The formation of hotspots in windings of the electromechanical system, increases rate of degradation of insulations associated with the winding. Typically, life of the insulation reduces by 50 percent for every 10°C rise in temperature. In general, events associated with the power supply affects performance and life of the electromechanical system. Consequently, lack of information on effects on the electromechanical system due to such events may lead to unexpected downtimes.

In light of the above, there exists a need for efficient management of the electromechanical system based on events associated with the power supply.

Therefore, it is an object of this invention to provide a system, apparatus and method for managing an electromechanical system.

The object of the present invention is achieved by a method for managing an electromechanical system. The term 'electromechanical system' may refer to any electromechanical machine that converts electrical energy to mechanical energy based on the principles of electromagnetic induction. Non-limiting examples of such devices include transformers, DC generators, alternators, DC brush motors, brushless motors, stepper motors, servomotors, synchronous motors, single-phase induction motors and multi-phase induction motors.

The method comprises receiving operational data associated with the electromechanical system from one or more sensing units in real-time. In one embodiment, the operational data is indicative of one or more operational characteristics associated with the electromechanical system. More specifically, the operational characteristics comprise values of one or more parameters associated with an operation of the electromechanical system. The one or more parameters may include, but not limited to, magnetic flux, current, voltage, vibration and temperature corresponding to one or more components of the electromechanical system. In one implementation, the operational characteristics may be received from the one or more sensing units continuously in real-time. In another implementation, the operational characteristics may be received from the electromechanical system at regular intervals of time.

Advantageously, the present invention uses operational data associated with the electromechanical system in real-time for managing the electromechanical system.

The method further comprises detecting an event associated with a power supplied to the electromechanical system based on the operational data. The event associated with the power may include, but are not limited to, voltage unbalance, phase unbalance, current unbalance and transients. In one embodiment, detecting the event associated with the power supplied to the electromechanical system based on the operational data comprises determining the event from at least one parameter in the operational data using a correlation model. The correlation model correlates the parameter to the event in the power supplied to the electromechanical system. The correlation model may be predetermined using correlation analysis techniques including, but not limited to, Pearson's technique, Kendall's technique and Spearman's technique. Advantageously, the present invention faciliates predicting effect of any event in the power supplied to the electromechanical system using suitable correlation models.

The method further comprises configuring a virtual replica of the electromechanical system using the operational data based on the event detected. The virtual replica is a virtual representation of the electromechanical system. The virtual replica may be dynamically updated based on operational data of the electromechanical system to represent a state of the electromechanical system in real-time. The virtual replica may be based on one or more of Computer-Aided Design (CAD) models, Computer-Aided Engineering (CAE) models, one-dimensional (1D) models, two-dimensional (2D) models, three-dimensional (3D) models, finite-element (FE) models, descriptive models, metamodels, stochastic models, parametric models, reduced-order models, statistical models, heuristic models, prediction models, ageing models, machine learning models, Artificial Intelligence models, deep learning models, system models, knowledge graphs and so on. In a preferred embodiment, the virtual replica is a digital twin of the electromechanical system. In one embodiment, the virtual replica of the electromechanical system is configured by updating the virtual replica of the electromechanical system using the operational data in real-time. Upon configuring, the virtual replica at any instant of time reflects a state of the electromechanical system in real-time. That is, the virtual replica represents an an instantaneous behaviour of the electromechanical system in real-time. In one embodiment, the virtual replica may be created and stored in an apparatus based on information received from an Original Equipment Manufacturer (OEM) of the electromechanical system. In another embodiment, the virtual replica may be stored in a user device, a personal computer, a removable storage device, a server, a cloud storage, and so on. The stored virtual replica may be accessed and downloaded onto the apparatus.

Advantageously, the virtual replica facilitates a soft sensor technique for measurement of parameters, for example inside the electromechanical system, that may not be measured easily using physical sensors. predicting effects due to the event associated with the power supplied to the electromechanical system.

The method further comprises generating one or more simulation results by simulating the configured virtual replica in a simulation environment. In one embodiment, a simulation instance of the elctromechanical system is generated using a simulation model. The simulation model may be an analytical model, in machine-executable form, derived from the physics-based models, data-driven models or hybrid models associated with the motor. The simulation instance may be a thread of simulation, associated with the simulation model, independent of all other threads during execution. Then, the simulation instance of the electromechanical system is executed in the simulation environment based on the configured virtual replica of the electromechanical system. In other words, the simulation instance is executed based on the state of the electromechanical system in real-time. The simulation instance may be executed in the simulation environment as one of stochastic simulations, deterministic simulations, dynamic simulations, continuous simulations, discrete simulations, local simulations, distributed simulations and so on. In a preferred embodiment, the simulation is based on Finite Element Analysis (FEA). The simulation results are generated based on execution of the simulation instance in the simulation environment.

Advantageously, the present invention uses the state of the electromechanical system in real-time for generating the simulation results.

The method further comprises determining an effect on the electromechanical system due to the event based on the simulation results. In one embodiment, a behaviour of the electromechanical system in real-time is analysed based on the simulation results. The term 'behaviour' as used herein may include, but not limited to, current flow, temperature gradients and magnetic field gradients across different parts of the electromechanical system. The behaviour of the electromechanical system may be analysed based on the simulation results using one or more of descriptive techniques, exploratory techniques, inferential techniques, predictive techniques, causal techniques, qualititative analysis techniques, quantitative analysis techniques and so on. Further, the effect on the electromechanical system is predicted based on the behaviour of the electromechanical system.

In one embodiment, the effect on the electromechanical system due to the event is associated with a performance of the electromechanical system. The performance may be indicated by parameters including, but not limited, to an output, heat generation, energy efficiency, operating efficiency, noise and vibration of the electromechanical system. In a further embodiment, an output of the electromechanical system is computed by analysing the simulation results. More specifically, the output of the electromechanical system is a torque output. Further, presence of torque ripples in the torque output of the electromechanical system is detected in real-time. The term 'torque ripples' as used herein may refer to a periodic increase or decrease in the torque output of the electromechanical system, for example, due to an unbalance in the power supplied. The presence of torque ripples may be detected by analysing the torque output of the electromechanical system over a predefined time interval. For example, the torque ripple may be calculated as a difference between a maximum value and a minimum value of torque on a rotor of the electromechanical system, in a single rotation.

In another embodiment, the effect on the electromechanical system due to the event is associated with damage to a component of the electromechanical system. The component may include, but not limited to, a rotor, a stator, a stator winding, a rotor winding, a housing and bearings associated with the electromechanical system. In a further embodiment, a thermal profile of the component is computed based on the simulation results. The term 'thermal profile' refers to a variation in temperature of the component over an interval of time. In one example, the thermal profile of the component may be computed based on temperature distribution in the electromechanical system at different instances of time, based on visual machine learning (ML) techniques. The visual ML techniques may also enable an operator of the electromechanical system to visualise the thermal profile on a graphical user interface. Further, presence of one or more hotspots in the component is detected based on the thermal profile. The term 'hotspots' may be defined as pockets of high temperature in the component. The hotspots may be determined based on heat generated at different regions in the component. Further, a damage to the component is determined based on the presence of the hotspot. In one example, the damage to the component may be determined in terms of a chemical degradation associated with the component. The chemical degradation may be determined using, for example, Arrhenius equation. In one embodiment, the effect on the electromechanical system may be further classified into predefined categories based on a criticality of the effect. The effect may be classified using any known classification algorithm, including but not limited to, decision trees, random forest and support vector machine. For example, the effect may be classified as one of 'nil', 'mild', and 'hazardous' using decision trees based on a consequence of the effect. The effect is classified as 'nil' if the effect is non-critical; 'mild' if the effect is associated with failure of the electromechanical system; and 'hazardous' if the effect is associated with damage to one or more loads connected to the electromechanical system.

Advantageously, the present invention faciliates early detection of effects such as hotspots and torque ripples for enabling operators to take preventive measures, for example, disconnecting a load from the electromechanical system.

The method may further comprise predicting a remaining useful life of the electromechanical system based on the effect on the electromechanical system due to the event. In one embodiment, the remaining useful life may be calculated based on a damage to a component of the electromechanical system. The temperature associated with a hotspot may be used for computing rate of degradation of the component with rise in temperature. For example, Arrhenius equation may be used for computing the rate of degradation. In one embodiment, the rate of degradation may be used for computing the remaining useful life of the component, for example, using a mathematical model. It must be understood by a person skilled in the art that the Arrhenius equation gives chemical degradation with temperature. In another embodiment, thermal fatigue resulting from cyclic thermal stress in the component is considered for predicting the remaining useful life of the electromechanical system. The thermal stress is determined based on the simulation results generated from Finite Element simulations associated with the electromechanical system. The cyclic thermal stresses are a result of cyclic material expansion and contraction when temperature changes under geometric constraints of the electromechanical system. The thermal fatigue may be one of a Low Cycle Fatigue (LCF) or a High Cycle Fatigue (HCF), based on a yield strength of a material of the component. Based on the type of thermal fatigue, a fatigue life of the component is computed. For example, in case of LCF, a plastic strain amplitude in the component is determined by analysing the simulation results based on visual ML. The plastic strain amplitude is further used in an LCF model associated with the component for computing a fatigue life of the component. In one example, the LCF model is a Coffin-Manson relation. In order to compute the remaining useful life with higher accuracy, other factors such as mechanical unbalance, electrical stress and process stress associated with the component are also determined, based on analysis of the simulation results. In one example, a predetermined mathematical model may be used to predict the remaining useful life of the electromechanical system, based on at least one of the fatigue life of one or more components, the rate of degradation in the one or more components and number of repairs conducted on each of the one or more components.

Advantageously, the present invention facilitates accurate prediction of remaining useful life of the electromechanical system based on events associated with the power supplied to the electromechanical system in addition to other fatigue-inducing factors.

Furthermore, the method may comprise determining a maintenance action to be performed on the electromechanical system based on the effect on the electromechanical system due to the event. The maintenance action may be associated with one of corrective maintenance, preventive maintenance or reactive maintenance. In one embodiment, the maintenance action may be determined based on a category of the effect on the electromechanical system. For example, if the effect is of 'mild' category, the maintenance action may be preventive and may include replacing or repairing a damaged component of the electromechanical system. If the effect is of 'hazardous' category, the maintenance action may comprise disconnecting the electromechanical system from the power supply and the load. In a preferred embodiment, the maintenance action is determined based on information stored on a knowledge graph. More specifically, the information corresponding to the maintenance action is retrieved from the knowledge graph using semantic search.

Advantageously, the present invention helps in accurately determining the maintenance action to be performed based on the effect on the electromechanical system using the knowledge graph.

The method may further comprise scheduling the maintenance action in order to optimise a down-time associated with the electromechanical system. The maintenance action is scheduled based on the remaining useful life of the component. In addition, other factors such as availability of spares, availability of service personnel and so on, may also be considered for scheduling the maintenance action. For example, the maintenance action is scheduled based on earliest availability of spares and service personnel, before the remaining useful life of the electromechanical system expires.

Advantageously, the present invention improves productivity of the electromechanical system by optimising the down time.

Additionally, the method comprises generating a notification indicating the effect on the electromechanical system due to the event. The notification may further comprise information associated with remaining useful life of the component, maintenance action required and a schedule for the maintenance action. The notification may be generated on a Graphical User Interface of an output device. The notification may be in the form of a visual alert, for example, in the form of augmented reality, virtual reality, three-dimensional content or two-dimensional content. In addition, the notification may also comprise an audio alert.

Advantageously, the present invention facilitates notifying an operator about hazardous effects associated with the electromechanical system.

The object of the present invention is achieved by an apparatus comprising one or more processing units, and a memory unit communicatively coupled to the one or more processing units. The memory unit comprises a management module stored in the form of machine-readable instructions executable by the one or more processing units. The management module is configured to perform method steps described above. The execution of the management module may also be performed using co-processors such as Graphical Processing Unit (GPU), Field Programmable Gate Array (FPGA) or Neural Processing/Compute Engines. In addition, the memory unit may also include a database.

According to an embodiment of the present invention, the apparatus can be an edge computing device. As used herein "edge computing" refers to computing environment that is capable of being performed on an edge device (e.g., connected to the sensors unit in an industrial setup and one end and to a remote server(s) such as for computing server(s) or cloud computing server(s) on other end), which may be a compact computing device that has a small form factor and resource constraints in terms of computing power. A network of the edge computing devices can also be used to implement the apparatus. Such a network of edge computing devices is referred to as a fog network.

In another embodiment, the apparatus is a cloud computing system having a cloud computing based platform configured to provide a cloud service for management of an electromechanical system. As used herein, "cloud computing" refers to a processing environment comprising configurable computing physical and logical resources, for example, networks, servers, storage, applications, services, etc., and data distributed over the network, for example, the internet. The cloud computing platform may be implemented as a service for analyzing operational data. In other words, the cloud computing system provides on-demand network access to a shared pool of the configurable computing physical and logical resources. The network is, for example, a wired network, a wireless network, a communication network, or a network formed from any combination of these networks.

Additionally, the object of the present invention is achieved by a system for management of an electromechanical system. The system comprises one or more sensing units configured for providing operational data associated with electromechanical system and an apparatus as described above, communicatively coupled to the one or more sensing units. The apparatus is configured to manage the electromechanical system based on the operational data according to the method as described above.

The object of the present invention is achieved by a computer-program product having machine-readable instructions stored therein, which when executed by a processor, cause the processor to perform a method as describe above.

The object of the present invention is also achieved by a computer-readable storage medium comprising instructions which, when executed by a computer, cause the computer to perform a method as describe above.

The above-mentioned attributes, features, and advantages of this invention and the manner of achieving them, will become more apparent and understandable (clear) with the following description of embodiments of the invention in conjunction with the corresponding drawings. The illustrated embodiments are intended to illustrate, but not limit the invention.

The present invention is further described hereinafter with reference to illustrated embodiments shown in the accompanying drawings, in which:

FIG 1     illustrates a block diagram of a system for managing an electromechanical system, in accordance with an embodiment of the present invention;

FIG 2     illustrates a set-up for calibration of a virtual replica of the electromechanical system, in accordance with an embodiment of the present invention;

FIG 3A     illustrates a Graphical User Interface showing transient temperature distribution of the electromechanical system for balanced voltages, in accordance with an embodiment of the present invention;

FIG 3B     illustrates a Graphical User Interface showing transient temperature distribution of the electromechanical system for unbalanced voltages, in accordance with an embodiment of the present invention;

FIG 4     illustrates a Graphical User Interface showing an electric circuit model of the electromechanical system, in accordance with an embodiment of the present invention;

FIG 5     is a flowchart depicting an exemplary method for managing an electromechanical system, in accordance with an embodiment of the present invention;

FIG 6     is flowchart depicting an exemplary method for detecting an event associated with a power supplied to the electromechanical system, in accordance with an embodiment of the present invention;

FIG 7     is a flowchart depicting an method for predicting effect of the voltage unbalance on a performance of the electromechanical system, in accordance with an embodiment of the present invention;

FIG 8A     is a flowchart depicting an method for predicting damage to components of the electromechanical system in realtime, in accordance with an embodiment of the present invention;

FIG 8B    is a flowchart depicting a method for generating recommendations for optimizing energy consumption of the electromechanical system, in accordance with an embodiment of the present invention. and

FIG 9    is a flowchart depicting an exemplary method for determining a maintenance action on the electromechanical system, in accordance with an embodiment of the present invention

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

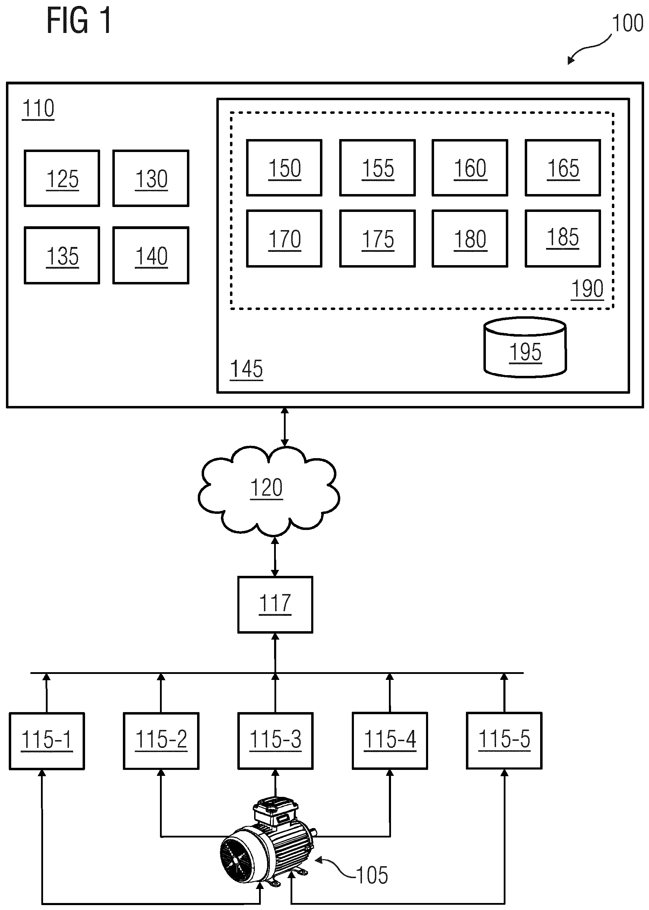

Referring to FIG 1, a system 100 for managing a squirrel-cage induction motor 105 is described, in accordance with an embodiment of the present disclosure. The squirrel-cage induction motor 105 may be hereinafter referred to as 'motor 105'. The motor 105 is powered from a three-phase power supply comprising three phases, namely, U-phase, V-phase and W-phase. The three-phase power supply may be hereinafter referred to as the power supply.

The system 100 comprises an apparatus 110 for managing the motor 105. The apparatus 110 is communicatively coupled to a plurality of sensing units 115, over a network 120. Each sensing unit among the plurality of sensing units 115 measure at least one parameter associated with an operation of the motor 105. In a preferred embodiment, the system 100 comprises a first sensing unit 115A for capturing a magnetic signature associated with the motor 105. The first sensing unit 115A may comprise, for example, a Gauss meter for measuring stray magnetic flux associated with the motor 105. The system 100 further comprises a second sensing unit 115B for capturing a temperature signature associated with the motor 105. The second sensing unit 115B may comprise, for example, a resistance temperature detectors (RTD) positioned on a stator casing of the motor 105 for capturing a surface temperature of the stator casing. The system 100 further comprises a third sensing unit 115C for capturing a load profile of the motor 105. The third sensing unit 115C may comprise, for example, a load cell mounted on a hydraulic actuator associated with the motor 105. The system 100 further comprises a fourth sensing unit 115D for measuring torque at an output of the motor 105. The fourth sensing unit 115D may comprise, for example, a torque sensor coupled to a shaft of the motor 105. In a further embodiment, the system 100 may comprise a fifth sensing unit 115E for measuring voltage and current values associated with the power supply. The fifth sensing unit 115E may be a motor protection device. The motor protection device may be configured for calculating phase unbalances based on voltages across different phases in the power supply. Similarly, the motor protection device may also calculate the voltage unbalances in the power supply based on line-voltages across different lines in the power supply. Similarly, the motor protection device may also calculate current unbalances based on line-currents in the power supply.

The first sensing unit 115A, the second sensing unit 115B, the third sensing unit 115C, the fourth sensing unit 115D and the fifth sensing unit 115E further provide operational data comprising the measured values of each of the parameters to a controller 117.

The controller 117 comprises a trans-receiver (not shown), one or more processors (not shown) and a memory (not shown). The trans-receiver is configured to connect the controller 117 to a network interface (not shown) associated with the network 120. In one embodiment, the controller 120 receives operational data from the plurality of sensing units 115 and transmits the operational data to the apparatus 105 through the network interface.

The apparatus 110 may be a (personal) computer, a workstation, a virtual machine running on host hardware, a microcontroller, or an integrated circuit. As an alternative, the apparatus 110 may be a real or a virtual group of computers (the technical term for a real group of computers is "cluster", the technical term for a virtual group of computers is "cloud").

The apparatus 110 includes a communication unit 125, one or more processing units 130, a display 135, a Graphical User Interface (GUI) 140 and a memory 145 communicatively coupled to each other. In one embodiment, the communication unit 125 includes a transmitter (not shown), a receiver (not shown) and Gigabit Ethernet port (not shown). The memory 145 may include 2 Giga byte Random Access Memory (RAM) Package on Package (PoP) stacked and Flash Storage. The processing unit 130 are configured to execute the defined computer program instructions in the modules. Further, the processing unit 130 are also configured to execute the instructions in the memory 145 simultaneously. The display 135 includes a High-Definition Multimedia Interface (HDMI) display and a cooling fan (not shown). Additionally, control personnel may access the apparatus 110 through the GUI 140. The GUI 140 may include a web-based interface, a web-based downloadable application interface, and so on.

The processing unit 130, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 130 may also include embedded controllers, such as generic or programmable logic devices or arrays, application specific integrated circuits, single-chip computers, and the like. In general, a processing unit 130 may comprise hardware elements and software elements. The processing unit 130 can be configured for multithreading, i.e. the processing unit 130 may host different calculation processes at the same time, executing the either in parallel or switching between active and passive calculation processes.

The memory 145 may include one or more of a volatile memory and a non-volatile memory. The memory 145 may be coupled for communication with the processing unit 130. The processing unit 130 may execute instructions and/or code stored in the memory 145. A variety of computer-readable storage media may be stored in and accessed from the memory 145. The memory 145 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In the present embodiment, the memory 145 includes a calibration module 150, a preprocessing module 155, an event detection module 160, a configuration module 165, a simulation module 170, an analytics module 175, a report generation module 180 and a maintenance module 185, hereinafter collectively referred to as management module 190, in the form of machine-readable instructions on any of the above-mentioned storage media and may be in communication to and executed by the processing unit 130. The memory 145 further comprises a database 195. The following description explains functions of the modules when executed by the processing unit 130.

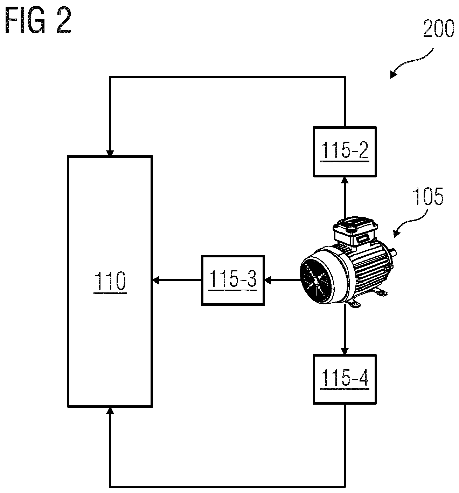

The calibration module 150 calibrates a virtual replica of the motor 105 to replicate substantially similar responses of the motor 105 in real-time, upon simulation. In other words, the virtual replica is calibrated to ensure a certain degree of fidelity with the motor 105. The virtual replica may be based on metadata associated with the motor 105, historical data associated with the motor 105 and a model of the motor 105. The metadata may include a current rating of the motor 105, a housing material of the motor 105, magnetic hysteresis coefficients of different parts of the motor 105, thermal coefficients of different parts of the motor 105, and so on. The historical data may comprise historic information related to performance, maintenance and health condition of the motor 105. The model of the motor 105 may include at least one of an artificial intelligence (AI) model and a physics-based model associated with the motor 105. In the present embodiment, the model of the motor 105 comprises a first AI model, a second AI model and a third AI model. The training of the first AI model, the second AI model and the third AI model is explained in greater detail using FIG 2.

The virtual replica is calibrated by tuning the first AI model, the second AI model and the third AI model for accurately representing the response of the motor 105. More specifically, the virtual replica is calibrated based on deviations between a response of the virtual replica and an actual response of the motor 105. The actual response of the motor 105 corresponds to the operational data recieved from the plurality of sensing units 115. In one example, the virtual replica may be calibrated using Bayesian calibration technique. Upon calibrating, the response of the virtual replica, say at time t=10 seconds, may represent the response of the motor 105 at time t=10 seconds under the same operating conditions.

The preprocessing module 155 is configured for preprocessing of operational data received from the plurality of sensing units 115. The preprocessing of the operational data may comprise different steps for preparing the operational data for further processing. The different steps in preprocessing may include, but not limited to, data cleaning, data normalisation, data selection and so on.

The event detection module 160 is configured for detecting an event associated with a power supplied to the motor 105 based on the operational data.

The configuration module 165 configures the virtual replica of the motor 105 using the operational data, based on the event detected.

The simulation module 170 is configured for generating one or more simulation results by simulating the configured virtual replica in a simulation environment.

The analytics module 175 is configured for predicting an effect on the motor 105 due to the event based on the simulation results.

The report generation module 180 is configured for generating a notification indicating the effect on the motor 105 due to the event.

The maintenance module 185 is configured for determining a maintenance action to be performed on the motor 105 based on the effect on the motor 105 due to the event. The maintenance module 185 is further configured for scheduling the maintenance action in order to optimise a down-time associated with the electromechanical system.

Those of ordinary skilled in the art will appreciate that the hardware depicted in FIG 1 may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present disclosure.

An apparatus in accordance with an embodiment of the present disclosure includes an operating system employing a Graphical User Interface. The operating system permits multiple display windows to be presented in the Graphical User Interface simultaneously with each display window providing an interface to a different application or to a different instance of the same application. A cursor in the Graphical User Interface may be manipulated by a user through the pointing device. The position of the cursor may be changed and/or an event such as clicking a mouse button, generated to actuate a desired response.

One of various commercial operating systems, such as a version of Microsoft Windows™ may be employed if suitably modified. The operating system is modified or created in accordance with the present disclosure as described.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of system, and is not limited to any particular distributed architecture, network, or communication protocol.

Disclosed embodiments provide systems and methods for management of a motor 105.

Referring to FIG 2, in conjunction with FIG 1, a set-up 200 for calibration of the virtual replica of the motor 105 is described, in accordance with one exemplary embodiment of the present disclosure. The set-up 200 comprises a load coupled to the shaft of the motor 105. In one example, the load may comprise a pump (not shown) and a hydraulic actuator (not shown). The load on the motor 105 is measured by the third sensing unit 115C.

The set-up 200 is used to determine empirical relationships between a voltage unbalance in the power supply and one or more parameters associated with the operation of the motor 105.

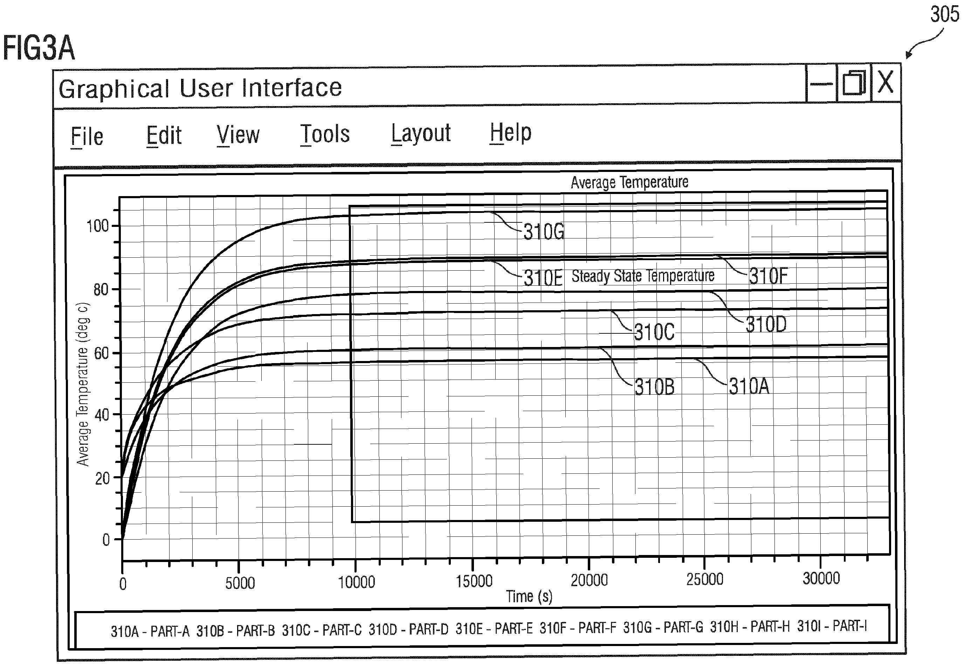

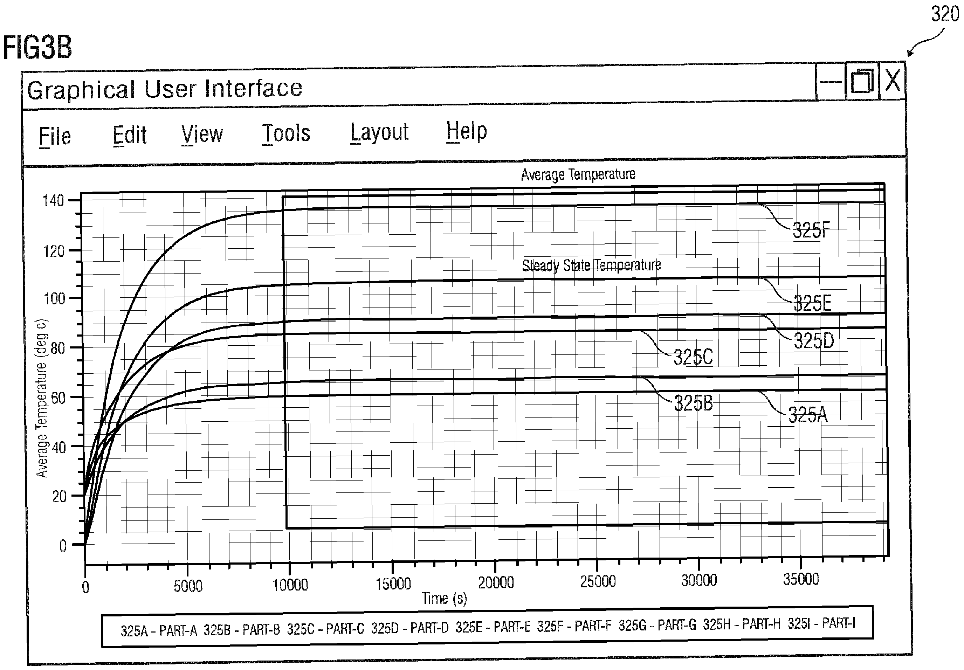

In one example, the parameter is a temperature of the stator coil corresponding to each phase of the power supply. The empirical relationship between the voltage unbalance and the temperature of the stator coil may be derived based on the temperature signature associated with the motor 105. At first, Finite Element (FE) simulations are performed to determine temperature distributions of the motor 105 corresponding to balanced voltages and unbalanced voltages. The term 'balanced voltage', as used herein, refers to a condition of the power supply,wherein the line voltages are equal. The term 'unbalanced voltages' as used herein, refers to a condition of the power supply, wherein the line voltages are unequal. For example, the unbalanced voltages may correspond to 2% undervoltage on U-phase, 3% overvoltage on W-phase and normal voltage on V-phase. In a preferred embodiment, the FE simulation is performed based on a multiphysics model of the motor 105. Based on the FE simulations, temperature rise in different parts of the motor 105 are determined. The different parts of the motor 105 may include, stator casing, bearings, shaft, stator core, U-phase coil, V-phase coil, W-phase coil and rotor core. Each of the FE simulations corresponding to the balanced voltages and the unbalanced voltages are performed until a thermal saturation point is reached. Upon reaching the thermal saturation point, transient temperature distribution for different components of the motor 105 is generated. FIG 3A shows a GUI 305 displaying the transient temperature distributions 310A, 310B...310I corresponding to different components part-A, part-B...part-I of the motor 105 for balanced voltages. FIG 3B shows a GUI 320 displaying the transient temperature distributions 325A, 325B...325I corresponding to the different components part-A, part-B...part-I of the motor 105 for unbalanced voltages. The different components part-A, part-B...part-1 may correspond to drive end bearing, non-drive end bearing, outer casing, rotor core, shaft, stator core, U-phase windings, V-phase windings and W-phase windings respectively. Further, the transient temperature distributions are validated based on the stator casing temperature obtained from the second sensing unit 115B.

Upon validation, the simulated temperatures for the different parts over a predefined interval of time are used for training the first AI model. The first AI model may be trained using machine learning techniques, including but not limited to, supervised learning techniques, unsupervised learning techniques, reinforcement learning techniques and deep learning.

The first AI model is used for predicting temperature in the different parts of the motor 105 based on the line voltages in the power supply. In the present embodiment, the first AI model may predict temperature in the stator casing, bearings, shaft, stator core, U-phase coil, V-phase coil, W-phase coil and rotor core based on the line voltages. Upon training, the first AI model is continuously calibrated based on the stator casing temperature obtained from the second sensing unit 115B. More specifically, the stator casing temperature from the second sensing unit 115B is compared with the stator casing temperature obtained from the first AI model for similar conditions of the voltage supply. Further, the first AI model may be calibrated for correcting deviations in the stator casing temperature. Consequently, deviations in predicted temperatures in other parts of the motor 105 are also corrected based on the calibration. In one example, the deviations are corrected by retraining the first AI model using stator casing temperature obtained from the second sensing unit 115B.

The first AI model further determines a temperature distribution of the motor 105 during operation, based on the temperatures in the different parts. The temperature distribution of the motor 105 is further used to determine position of one or more hotspots in the phase windings. It must be understood that the temperature in a phase winding is dependent on a current density in the phase winding.

In another example, the second AI model may be trained for predicting a torque ripple profile in an output of the motor 105 based on the voltage supply. More specifically, the second AI model is trained to predict torque on a shaft of the motor 105 in an instant based on simulated values of torque at the shaft of the motor 105 for balanced voltages and unbalanced voltages. The second AI model may be trained using machine learning techniques, including but not limited to, supervised learning techniques, unsupervised learning techniques, reinforcement learning techniques and deep learning. Upon training, the second AI model is validated based on actual torque measured by the fourth sensing unit 115D. The second AI model is further calibrated to correct any deviations between the predicted torque and the actual torque. The deviations are corrected by retraining the second AI model using the actual torque measured by the fourth sensing unit 115D. Based on the torque predicted by the second AI model, a torque ripple profile of the motor 105 may be computed. The torque ripple profile may be calculated as a difference between maximum torque and minimum torque in one rotation of the shaft.

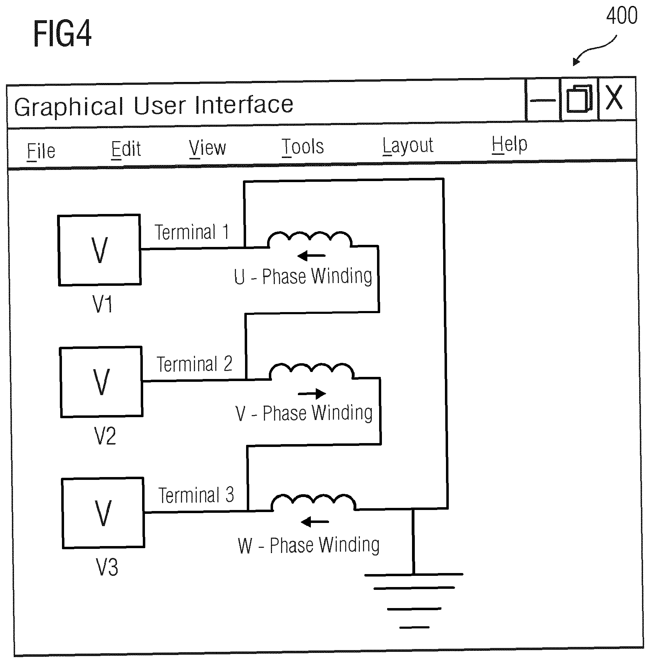

In another example, an electric circuit model of the motor 105 is used to simulate iron losses and copper losses in different parts of the motor 105. The term 'iron loss', as used herein, refers to energy losses in the motor 105 resulting from hysteresis and eddy currents. The term 'copper loss', as used herein, refers to energy losses windings of the motor 105, resulting from current flow in the windings. The electric circuit model is a physics-based model and comprises a plurality of equivalent circuits corresponding to each part of the motor 105. The equivalent circuits are connected together to represent a behaviour of the motor 105 during operation. In one example, a simplified electric circuit model of the motor 105 comprises a delta-connection, as shown in FIG 4. FIG 4 illustrates a GUI 400 showing the simplified electric circuit model of the motor 105, in accordance with an embodiment of the present invention. The delta-connection is further connected to three voltage inputs VI, V2 and V3, each of which correspond to the real-time line voltages on U, V and W phases, respectively, as measured by the fifth sensing unit 115E. Upon simulation, electrical and magnetic responses of the phase windings to balanced voltages and unbalanced voltages are obtained. Further, the iron losses and the copper losses in the phase windings are determined based on the electrical and magnetic responses of the phase windings. The simulated values of the iron losses and the copper losses are further used to train the third AI model for predicting iron losses and copper losses based on the voltage supply. The third AI model may be trained using machine learning techniques, including but not limited to, supervised learning techniques, unsupervised learning techniques, reinforcement learning techniques and deep learning. Upon training, the third AI model is validated based on outputs of the plurality of sensing units 115. In one example, the actual iron losses is calculated based on value of magnetic flux obtained from the first sensing unit 115A and predetermined material characteristics associated with the component, using mathematical relations known to a person skilled in the art. The predetermined material characteristics include coefficient of eddy current, volume of a material in the component, thickness of lamination and so on. The actual copper losses may be computed based on an electrical input to the motor 105, a mechanical output of the motor 105 and the actual iron losses. More specifically, the actual copper losses is a difference between the electrical input, and sum of the mechanical output and the actual iron losses. The electrical input to the motor 105 is computed based on current and voltage measured by the fifth sensing unit 115E. The mechanical output is computed based on torque measured by the fourth sensing unit 115D. In case of deviations between predicted values of iron losses and copper losses, the third AI model is retrained based on actual outputs of the sensing units 115, in order to improve accuracy of prediction. The third AI model, after training, is further used to compute iron losses and copper losses associated with different parts of the motor 105.

It must be understood by a person skilled in the art that the first AI model, the second AI model and the third AI model may be a combined to form a hybrid model that predicts empirical relationship between the voltage unbalance and a plurality of parameters associated with the motor 105. It must also be understood that each of the first AI model, the second AI model and the third AI model may be substituted by suitable metamodels for improving computation speed of the apparatus 110.

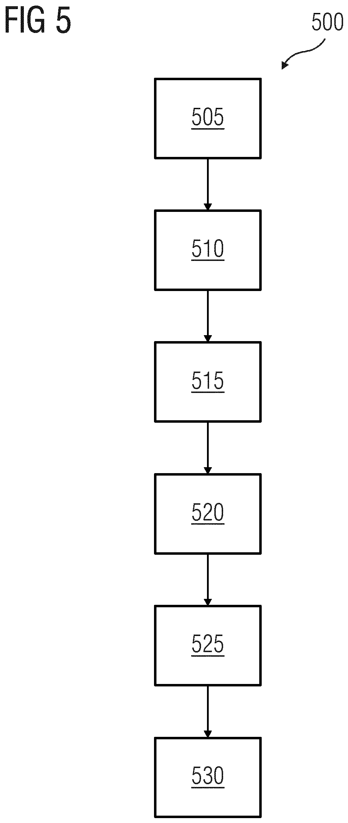

FIG 5 shows a flowchart depicting an exemplary method 500 for managing an electromechanical system, in accordance with an embodiment of the present invention. The method 500 is implemented on the apparatus 110. Further, the method 500 comprises steps 505 to 530.

At step 505, operational data associated with the electromechanical system is received from one or more sensing units in real-time.

At step 510, an event associated with a power supplied to the electromechanical system is detected based on the operational data.

At step 515, a virtual replica of the electromechanical system is configured using the operational data, based on the event detected.

At step 520, one or more simulation results are generated by simulating the configured virtual replica in a simulation environment.

At step 525, an effect on the electromechanical system due to the event is predicted based on the simulation results.

At step 530, a notification indicating the effect on the electromechanical system due to the event is generated.

The steps 505-530 in the method 500 is explained in greater detail for management of the motor 105, by considering the event to be a voltage unbalance in the power supplied to the motor 105.

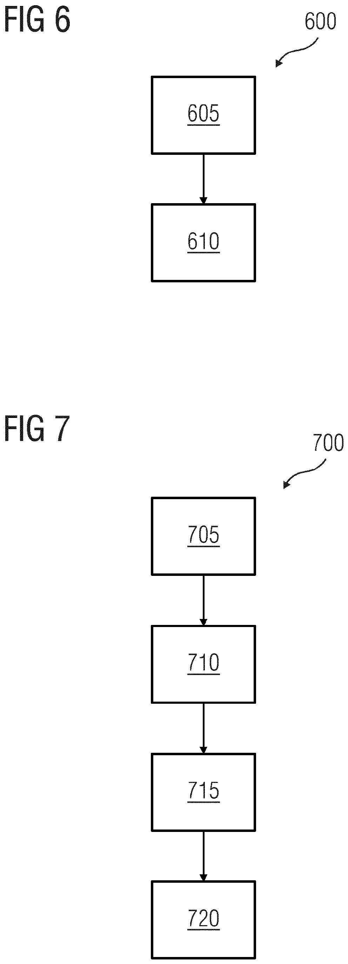

FIG 6 shows a flowchart depicting an exemplary method 600 for detecting the event associated with the power supplied to the motor 105 based on the operational data, in accordance with an embodiment of the present invention. The operational data received from the plurality of sensing units 115 is firstly preprocessed upon execution of the preprocessing module 155 by the processing unit 130. Upon preprocessing, the event detection module 160 is executed to perform steps 605 and 610 for detecting the unbalanced voltages.

At step 605, values of the parameters in the operational data is provided as input to at least one correlation model. The correlation model correlates the parameters to one or more events in the power supply. In one implementation, the correlation model relates a stray magnetic flux measured by the first sensing unit 115A to deviations in line voltages of the power supply from an average of the line voltages.

At step 610, the voltage deviations from the correlation model is compared to a predefined range or predefined value. Based on the comparison, the event is detected. For example, if the voltage deviation in any of the line voltages is greater than 0.5%, a voltage unbalance is detected.

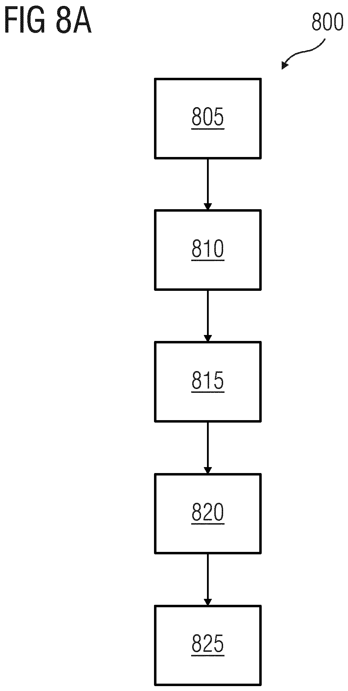

Upon detecting the voltage unbalance an effect of the unbalance on the motor 105 is predicted. In one embodiment, the effect may be associated with a performance of the motor 105 as described using FIG 7. In another embodiment, the effect may be associated with damage to a component of the motor 105 as described using FIG 8A.

FIG 7 shows a flowchart depicting a method 700 for predicting effect of the voltage unbalance on a performance of the motor 105, in accordance with an embodiment of the present invention. More specifically, the method 700 relates to detecting presence of torque ripples in the output of the motor 105 upon detecting the voltage unbalance in the power supply. The method comprises steps 705 to 720.

At step 705, the configuration module 165 updates the virtual replica using the operational data in real-time. Upon updating, the virtual replica represents a state of the motor 105 in real-time.

At step 710, the simulation module 170 executes simulation instances of a simulation model of the motor 105 based on the updated virtual replica. The simulation instance is executed in the form of stochastic simulations. Subsequently, simulation results are generated from the stochastic simulations. Similarly, a plurality of simulation instances are executed based on the different instances of the configured virtual replica. In the present embodiment, the simulation results are indicative of a torque on the shaft of the motor 105 at different instances of time. In one example, the different instances of time may be associated with a complete rotation of the shaft of the motor 105.

At step 715, the analytics module 175 analyses the behaviour of the motor 105 based on the simulation results corresponding to the plurality of simulation instances. In one example, the behaviour is analysed using transient analysis. Based on the analysis, maximum torque and minimum torque measured during the complete rotation of the shaft are determined. Further, the torque ripple is detected if the difference between the maximum torque and the minimum torque is greater than a predefined value, for example, 0.1 Nm. Further, the report generation module 180 generates a notification indicating the presence of torque ripples as shown in 720, on the GUI 140.

FIG 8A shows a flowchart depicting an exemplary method 800 for predicting damage to components of the motor 105 in real-time, in accordance with an embodiment of the present invention. More specifically, the damage to the component resulting from formation of hotspots is predicted, upon detecting the voltage unbalance in the power supply. The method 800 comprises steps 805 to 825.

At step 805, the configuration module 165 updates the virtual replica using the operational data in real-time. Upon updating, the virtual replica represents a state of the motor 105 in real-time.

At step 810, the simulation module 170 executes simulation instances of a simulation model of the motor 105 based on the updated virtual replica. The simulation instance is executed in the form of stochastic simulations. Subsequently, simulation results are generated from the stochastic simulations. Similarly, a plurality of simulation instances are executed based on the different instances of the configured virtual replica. The simulation results are indicative of a temperature distribution of the motor 105 at different instances of time.

At step 815, the analytics module 175 analyses the behaviour of the motor 105 based on the simulation results corresponding to the plurality of simulation instances. In the present embodiment, the behaviour is analysed using transient analysis, for computing the thermal profile associated with the components of the motor 105 based on the temperature distribution corresponding to each of the instances. The transient analysis may be performed using visual ML. Further, hotspots are identified based on the thermal profile associated with the components. For example, if the thermal profile of the U-phase winding indicates a temperature greater than 40 degrees for a period of more than 5 minutes, a hotspot is detected on the U-phase winding.

At step 820, the analytics module 175 predicts damage to the component based on the presence of the hotspot. The damage may be a thermal fatigue associated with the U-phase winding resulting from the hotspot. In the present example, the damage to the U-phase winding is estimated using, for example, Arrhenius equation. The Arrhenius equation is used to compute rate of degradation of a winding insulation of the U-phase winding based on the thermal profile.

At step 825, the report generation module 180 generates a notification indicating the damage to the U-phase winding, on the GUI 140. For example, the damage may be thermal stress in different parts of the U-phase winding. Further, varying levels of thermal stress in different portions of the U-phase winding may be indicated using different shades of colours. In one example, bright red may indicate a high thermal stress and light red may indicate relatively lower thermal stress. The notification is further displayed on the Graphical User Interface 140.

In a further embodiment, the analytics module 175 determines remaining useful life of the motor 105 based on the damage predicted for the component. The remaining useful life of the motor 105 is computed by a predetermined mathematical model based on a fatigue life of the component and the rate of degradation of the winding insulation. The fatigue life is computed using Coffin-Manson relation. Similarly, fatigue life of all the components in the motor 105 is determined by predicting damage to the components from the voltage unbalance. The remaining useful life of the motor 105 may correspond to the least value of fatigue life of all the components.

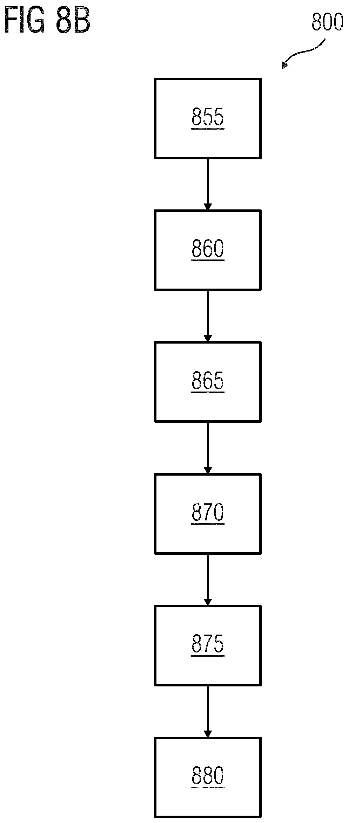

FIG 8B shows a flowchart depicting a method 850 for generating recommendations for optimizing energy consumption of the motor 105, in accordance with an embodiment of the present invention. The method 900 comprises steps 855 to 880, which follow step 815 of FIG 8A.

At step 855, the analytics module 175 computes copper losses and iron losses in each of the stator and the rotor of the motor 105. The copper losses and iron losses are computed by the third AI model, based on the thermal profile associated with the components.

At step 860, the analytics module 175 determines an additional energy consumed by the motor 105. For example, an electrical input $P_{in}$ to the motor 105 is is calculated based on current and voltage values associated with the power supply, as measured by the fifth sensing unit 115E. Further, stator losses $P_S$ is computed as a sum of the iron losses and the copper losses in the stator. The stator losses are further used to determine a electrical input to the rotor $P_2$ is calculated as:

$$P_2 = P_{in} - P_s \qquad \qquad \_(1)$$

Further, a mechanical output $P_m$ of the motor 105 is calculated based on the electrical input to the rotor $P_2$ and the copper losses $P_R$ in the rotor as:

$$P_m = P_2 - P_R \qquad \qquad \_(2)$$

At step 865, the analytics module 175 computes an efficiency, $\eta_1$ of the motor 105 based on the mechanical output $P_m$ and the electrical input $P_{in}$.

$$\eta_1 = P_m / P_{in} \qquad \qquad - (3)$$

At step 870, the analytics module 175 compares the efficiency of the motor 105 to a predetermined efficiency of the motor 105 corresponding to balanced voltages, under similar load conditions.

At step 875, a difference in the efficiencies of the motor 105 corresponding to unbalanced voltage and balanced voltage is determined based on the comparison. Further, an optimal load of the motor 105 corresponding to the unbalanced voltages, is determined based on the difference in the efficiencies. For example, the optimal load is determined, using equations (1) to (3) such that the efficiency of the motor 105 corresponding to the unbalanced voltages is greater than or equal to the predetermined efficiency of the motor 105. Further, one or more recommendations are generated to adjust the load on the motor 105 to the optimal load or a lesser load as shown in step 880. In one example, the one or more recommendations may include predefined instructions for reducing the load without affecting the motor 105.

In one example, cost savings from performing load adjustments on the motor 105 may also be shown along with the recommendations for the load ajustment. The cost savings may be computed for a specific period of time based on a load factor of the motor 105, a rating of the motor 105, the difference in efficiencies for the balanced voltage and the unbalanced voltage for a given period of time. For example, the cost savings may be calculated based on difference in energy consumption of the motor 195 corresponding to both balanced voltages and unbalanced voltages. If the power rating of the motor 105 is 100 kW and the motor 105 is operating at 75% of full load, the mechanical power developed by the motor 105 is roughly 75 kW. Let the predetermined efficiency $\eta_2$ of the motor 105 corresponding to balanced voltages be 95.2% and the efficiency $\eta_1$ corresponding to voltage unbalance of 2.5% be 93.9%. Assume that the cost of energy is $0.08 per kWh and the load factor is 1. The cost savings for 8000 operational hours is calculated as:

$$Cost\ savings = Mechanical\ power\ developed\ x\ Operational\ hours\ x$$

$$Load\ factor\ x\ 100(1/\eta_1 - 1/\eta_2)\ x\ cost\ per\ energy\ unit$$

$$= 75\ kW\ x\ 8000\ h\ x\ 1\ x\ 100(1/93.9 - 1/95.2)\ x\ 0.08$$

$$= \$698$$

The report generation module 180 may further generate a notification indicating the recommendations for load adjustment and the cost savings on the GUI 140.

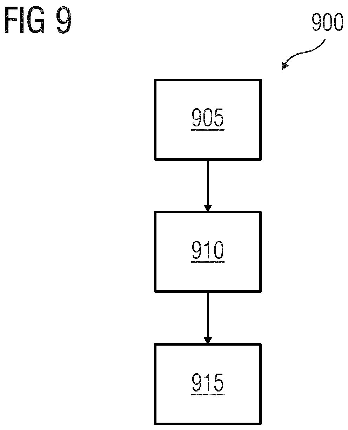

FIG 9 shows a flowchart depicting an exemplary method 900 for determining a maintenance action on the motor 105 based on the effect on the motor 105 from the event, in accordance with an embodiment of the present invention. The method 900 comprises 905-915 which are performed upon execution of the maintenance module 185.

At step 905, a keyword corresponding to a damaged component and type of damage associated with the damaged component, is identified based on predefined rules. In the example of FIG 8A, the keyword corresponding to the damaged component may be 'U-phase winding' and the keyword corresponding to the type of damage may be hotspot'. In one implementation, the keywords may be stored in the database 195. Upon determining damage to the component, the keyword corresponding to the component is identified from the database 195.

At step 910, the keyword corresponding to the component is used for semantics based searching, for example, on a knowledge graph. The knowledge graph comprises linked data corresponding to various aspects of the motor 105. For example, the linked data may comprise information on the different parts of the motor 105, types of damages associated with each of the components and corresponding maintenance actions.

At step 915, the maintenance action is identified from the linked list, corresponding to the damaged component and the type of damage to the component. For example, in case of damage to the U-phase winding due to formation of hotspots, the maintenance action may include rewinding of the U-phase winding.

The apparatus 110 schedules the identified maintenance action to optimise downtime of the motor 105. In one example, the maintenance action is scheduled before the remaining useful life of the motor 105 expires. In one example, the maintenance action may be scheduled before 30 working hours from the expiry of the remaining useful life.

The present invention may take the form of a computer program product comprising program modules accessible from computer-usable or computer-readable medium storing program code for use by or in connection with one or more computers, processors, or instruction execution system. For the purpose of this description, a computer-usable or computer-readable medium is any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology may be centralized or distributed (or a combination thereof) as known to those skilled in the art.

While the invention has been illustrated and described in detail with the help of a preferred embodiment, the invention is not limited to the disclosed examples. Other variations can be deducted by those skilled in the art without leaving the scope of protection of the claimed invention.

List of reference numbers

**[0105]**

100 System for managing a motor
105 motor
110 apparatus for managing a motor
115 sensing units
120 network
125 communication unit
130 one or more processing units
135 display
140 Graphical User Interface (GUI)

145 memory
150 calibration module
155 preprocessing module
160 event detection module
165 configuration module
170 simulation module
175 analytics module
180 report generation module
185 maintenance module
190 management module
195 database
200 set-up for calibration of the virtual replica of the motor
305 GUI displaying transient temperature distributions corresponding to different components of the motor for balanced voltages
320 GUI displaying transient temperature distributions corresponding to different components of the motor for unbalanced voltages

## Claims

1. A computer-implemented method for managing an electromechanical system (105), the method comprising:

   receiving, by a processing unit (130), operational data associated with the electromechanical system (105) from one or more sensing units (115) in real-time;
   detecting an event associated with a power supplied to the electromechanical system (105) based on the operational data;
   configuring a virtual replica of the electromechanical system (105) using the operational data, based on the event detected;
   generating one or more simulation results by simulating the configured virtual replica in a simulation environment;
   predicting an effect on the electromechanical system (105) due to the event based on the simulation results; and
   generating a notification indicating the effect on the electromechanical system (105) due to the event.

2. The method according to claim 1, wherein detecting the event associated with the power supplied to the electromechanical system (105) based on the operational data comprises:
   determining the event from at least one parameter in the operational data using a correlation model, wherein the correlation model correlates the parameter to the event in the power supplied to the electromechanical system (105).

3. The method according to claim 1 or 2, wherein the event is associated with at least one of a voltage unbalance and a current unbalance in the power supply.

4. The method according to claim 1, wherein predicting the effect on the electromechanical system (105) due to the event based on the simulation results comprises:

   analysing a behaviour of the electromechanical system (105) in real-time based on the simulation results; and
   predicting the effect on the electromechanical system (105) based on the behaviour of the electromechanical system (105).

5. The method according to claim 1 or 4, wherein the effect on the electromechanical system (105) due to the event is associated with a performance of the electromechanical system (105).

6. The method according to claim 1 or 4, wherein predicting the effect on the electromechanical system (105) based on the behaviour of the electromechanical system (105) comprises:

   computing an output of the electromechanical system (105) by analysing the simulation results; and
   detecting presence of torque ripples in the output of the electromechanical system (105) in real-time.

7. The method according to claim 1 or 4, wherein the effect on the electromechanical system (105) due to the event is associated with damage to a component of the electromechanical system (105).

8. The method according to any one of the claims 1, 4 or 7, wherein predicting the effect on the electromechanical system (105) based on the behaviour comprises:

    computing a thermal profile of the component based on the behaviour;
    detecting presence of one or more hotspots in the component based on the thermal profile; and
    determining a damage to the component based on the presence of the hotspot.

9. The method according to claim 1, further comprising:
    predicting a remaining useful life of the electromechanical system (105) based on the effect on the electromechanical system (105) due to the event.

10. The method according to claim 1, further comprising:
    determining a maintenance action to be performed on the electromechanical system (105) based on the effect on the electromechanical system (105) due to the event.

11. The method according to claim 1 or 10, further comprising:
    scheduling the maintenance action in order to optimise a down-time associated with the electromechanical system (105).

12. An apparatus (110) for managing an electromechanical system (105), the apparatus comprising:

    one or more processing units (130); and
    a memory unit (145) communicatively coupled to the one or more processing units (130), wherein the memory unit (145) comprises a management module (190) stored in the form of machine-readable instructions executable by the one or more processing units (130), wherein the management module (190) is configured to perform method steps according to any of the claims 1 to 11.

13. A system (100) for managing an electromechanical system (105) comprising:

    one or more sensing units (115) configured for providing operational data associated with electromechanical system (105); and
    an apparatus according to claim 12, communicatively coupled to the one or more sensing units (115), wherein the apparatus (110) is configured to manage the electromechanical system (105) based on the operational data according to any of the method claims 1 to 11.

14. A computer-program product having machine-readable instructions stored therein, which when executed by one or more processing units (130), cause the processing units (130) to perform a method according to any of the claims 1 to 11.

15. A computer-readable storage medium comprising instructions which, when executed by a computer, cause the computer to perform a method according to any of the claims 1 to 11.

FIG 1

100

110

| 125 | 130 |
| 135 | 140 |

| 150 | 155 | 160 | 165 |
| 170 | 175 | 180 | 185 |

190

145

195

120

117

115-1    115-2    115-3    115-4    115-5

105

FIG 2

**FIG3A**

305

Graphical User Interface — ⬜ X

File    Edit    View    Tools    Layout    Help

Average Temperature

310G

310E   Steady State Temperature   310F

310C                              310D

310B        310A

Average Temperature (deg c)

100

80

60

40

20

0

0        5000      10000      15000      20000      25000      30000
Time (s)

310A - PART-A  310B - PART-B  310C - PART-C  310D - PART-D  310E - PART-E  310F - PART-F  310G - PART-G  310H - PART-H  310I - PART-I

EP 3 905 516 A1

**FIG3B**

320

EP 3 905 516 A1

Graphical User Interface — □ X

File    Edit    View    Tools    Layout    Help

Average Temperature

325F

Steady State Temperature

325E

325D

325C

325B    325A

Average Temperature (deg c)

140
120
100
80
60
40
20
0

0    5000    10000    15000    20000    25000    30000    35000

Time (s)

325A - PART-A  325B - PART-B  325C - PART-C  325D - PART-D  325E - PART-E  325F - PART-F  325G - PART-G  325H - PART-H  325I - PART-I

FIG4

400

Graphical User Interface    — 🗗 X

File        Edit        View        Tools        Layout        Help

V
V1
Terminal 1
U - Phase Winding

V
V2
Terminal 2
V - Phase Winding

V
V3
Terminal 3
W - Phase Winding

# FIG 5

500

505

510

515

520

525

530

## FIG 6

600

## FIG 7

700

FIG 8A

800

805

810

815

820

825

FIG 8B

800

855

860

865

870

875

880

FIG 9

900

| Europäisches Patentamt European Patent Office Office européen des brevets | **EUROPEAN SEARCH REPORT** | Application Number EP 20 17 2373 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | US 2019/302711 A1 (NETI PRABHAKAR [US] ET AL) 3 October 2019 (2019-10-03)<br>* paragraph [0001] - paragraph [0006];<br>figures 1, 2,3, 8, 9, 14 *<br>* paragraph [0027] - paragraph [0033] *<br>* paragraph [0038] - paragraph [0039] *<br>* paragraph [0043] - paragraph [0045] *<br>* paragraph [0052] *<br>* paragraph [0062] - paragraph [0068] *<br>* paragraph [0073] *<br>* paragraph [0079] - paragraph [0083] *<br>----- | 1,3-5,7,<br>9-15<br>2<br>6,8 | INV.<br>H02P29/02<br>H02P29/024<br>H02P29/028<br>H02P29/032<br>H02P29/60 |
| Y<br>A | WO 2018/089957 A1 (GEN ELECTRIC [US])<br>17 May 2018 (2018-05-17)<br>* paragraph [0001] - paragraph [0004];<br>figures 1A, 1B, 2A, 2B, 5F, 7 *<br>* paragraph [0005] - paragraph [0006] *<br>* paragraph [0030] - paragraph [0043] *<br>* paragraph [0049] - paragraph [0051] *<br>* paragraph [0058] - paragraph [0060] *<br>* paragraph [0078] *<br>----- | 1,2,4,5,<br>7,9-15<br>3,6,8 | |
| Y<br>A | US 2008/140360 A1 (GOEBEL KAI FRANK [US] ET AL) 12 June 2008 (2008-06-12)<br>* paragraph [0020] - paragraph [0032];<br>claim 1; figures 1-4, 13, 14 *<br>* paragraph [0050] - paragraph [0064] *<br>----- | 1,2,4,5,<br>7,9-15<br>3,6,8 | TECHNICAL FIELDS SEARCHED (IPC)<br>H02P |

The present search report has been drawn up for all claims

| Place of search | Date of completion of the search | Examiner |
|---|---|---|
| Munich | 15 October 2020 | Roussel, Maxime |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 17 2373

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2020

| Patent document cited in search report | | Publication date | Patent family member(s) | | Publication date |
|---|---|---|---|---|---|
| US 2019302711 | A1 | 03-10-2019 | NONE | | |
| WO 2018089957 | A1 | 17-05-2018 | US 2018137219 A1 | | 17-05-2018 |
| | | | WO 2018089957 A1 | | 17-05-2018 |
| US 2008140360 | A1 | 12-06-2008 | NONE | | |

EPO FORM P0459

For more details about this annex : see Official Journal of the European Patent Office, No. 12/82